Europäisches Patentamt

European Patent Office

Office européen des brevets

(11) Numéro de publication : **0 391 764 B1**

# (12) FASCICULE DE BREVET EUROPEEN

(45) Date de publication du fascicule du brevet :
**13.05.92 Bulletin 92/20**

(21) Numéro de dépôt : **90400779.6**

(22) Date de dépôt : **21.03.90**

(51) Int. Cl.⁵ : **F16B 37/04**

(54) **Ecrou encagé perfectionné.**

(30) Priorité : **24.03.89 FR 8903917**

(43) Date de publication de la demande :
**10.10.90 Bulletin 90/41**

(45) Mention de la délivrance du brevet :
**13.05.92 Bulletin 92/20**

(84) Etats contractants désignés :
**AT BE CH DE DK ES GB GR IT LI LU NL SE**

(56) Documents cités :
**FR-A- 1 431 766**
**FR-A- 1 588 345**

(73) Titulaire : **RAPID S.A.**
**251 Boulevard Péreire**
**F-75852 Paris Cédex 17 (FR)**

(72) Inventeur : **Dubost, Dominique**
**53 Résidence Elysées II**
**F-78170 La Celle Saint Cloud (FR)**

(74) Mandataire : **Durand, Yves Armand Louis et al**
**CABINET WEINSTEIN 20, Avenue de**
**Friedland**
**F-75008 Paris (FR)**

EP 0 391 764 B1

Jouve, 18, rue Saint-Denis, 75001 PARIS

**Description**

La présente invention a pour objet un écrou encagé perfectionné qui peut être monté en aveugle par la seule face accessible d'un panneau, d'une tôle ou analogue et qui permet la fixation par vissage de pièces mécaniques quelconques sur ce panneau ou cette tôle.

On connaît déjà depuis longtemps des écrous encagés à montage en aveugle comprenant une cage formée d'une embase comportant d'une part deux pattes latérales qui permettent le basculement de la cage dans une première ouverture ménagée dans un panneau ou analogue ainsi que la retenue de cette cage contre ledit panneau et d'autre part deux ailes latérales repliées contre un écrou qui est ainsi maintenu encagé sur l'embase et dont le trou fileté se situe au droit d'un orifice prévu dans ladite embase et susceptible de venir en regard d'une deuxième ouverture ménagée dans le panneau pour permettre le passage d'un élément fileté, tel que par exemple une vis, après montage de l'écrou encagé sur le panneau.

Un écrou encagé du genre ci-dessus est décrit dans le brevet français N° 1 431 766, mais présente un certain nombre d'inconvénients.

En effet, la charge axiale que doit subir l'écrou proprement dit, c'est-à-dire la résistance à la traction axiale après assemblage des pièces par vissage, est trop faible. Ceci provient du fait que la hauteur de l'écrou est trop petite du fait des dimensions imposées et relativement faibles de l'ouverture ménagée dans le panneau et permettant le basculement et le montage de l'écrou.

Plus précisément, dans les écrous encagés du genre ci-dessus, la hauteur du trou taraudé de l'écrou proprement dit était nécessairement réduite, car, à cette hauteur devait s'ajouter l'épaisseur de l'embase formant cage et la longueur d'une extrusion faisant saillie de l'orifice ménagée dans l'embase, étant entendu que l'ensemble devait pouvoir passer au travers de l'ouverture pratiquée dans le panneau pour permettre le montage. Autrement dit, la hauteur du trou taraudé de l'écrou était nécessairement limitée par le fait qu'il fallait aussi permettre le passage dans l'ouverture du panneau de l'épaisseur de l'embase formant la cage et de la longueur de l'extrusion faisant saillie de l'embase et destinée à pénétrer, après montage, dans une autre ouverture du panneau.

La présente invention a pour but de proposer un écrou encagé du type défini plus haut mais dans lequel l'écrou proprement dit possède une hauteur maximum correspondant sensiblement à l'entière largeur de l'ouverture du panneau dans laquelle doit pivoter et être monté ledit écrou, de sorte que la résistance axiale à la traction que peut supporter cet écrou est elle aussi maximum et que l'écrou peut servir à réaliser des assemblages quelconques et très rigides.

A cet effet, l'invention a pour objet un écrou encagé perfectionné du type à montage en aveugle et comprenant une cage formée d'une embase comportant d'une part deux pattes latérales qui permettent le basculement de la cage dans une première ouverture ménagée dans un panneau ou analogue ainsi que la retenue de cette cage contre ledit panneau, et d'autre part deux ailes latérales repliées contre un écrou qui est ainsi maintenu encagé sur l'embase et dont le filetage se situe au droit d'un orifice prévu dans ladite embase et susceptible de venir en regard d'une deuxième ouverture pratiquée dans le panneau pour permettre le passage d'un élément fileté, tel que par exemple une vis, après montage de l'écrou encagé sur le panneau, caractérisé en ce que ledit écrou est pourvu à une certaine distance de ses deux faces d'extrémité d'un collet sur lequel prennent appui les deux ailes latérales repliées pour retenir ledit collet sur l'embase de telle sorte qu'une partie de l'écrou, d'un côté du collet, traverse et fasse saillie de l'orifice ménagé dans l'embase et que l'autre partie de l'écrou, de l'autre côté du collet, s'étende au-delà des ailes latérales repliées sur ledit collet.

On comprend donc de ce qui précède que l'écrou possèdera la hauteur maximum qu'il puisse avoir compte tenu des dimensions de l'ouverture du panneau qu'il doit traverser.

Suivant une caractéristique de l'invention, l'écrou est un fût taraudé, tandis que le collet venant de matière avec ce fût présente une forme polygonale, telle que carrée par exemple.

On précisera encore que, suivant l'invention, les deux ailes latérales repliées sur le collet forment chacune une double griffe.

Mais les caractéristiques et avantages de l'invention apparaîtront mieux dans la description détaillée qui suit et se réfère aux dessins annexés, donnés uniquement à titre d'exemple, et dans lesquels :

La figure 1 est une vue en perspective d'un écrou encagé conforme à l'invention ;

Les figures 2 et 3 sont respectivement des vues de dessus et de côté de cet écrou encagé ;

Les figures 4 et 5 sont des vues respectivement en plan de dessus, et en élévation de l'écrou proprement dit ;

La figure 6 est une vue en plan d'une portion de panneau comportant des perçages ou ouvertures permettant le montage de l'écrou encagé ; et

La figure 7 illustre, en coupe verticale, la fixation d'une pièce quelconque sur un panneau à l'aide de l'écrou encagé selon cette invention.

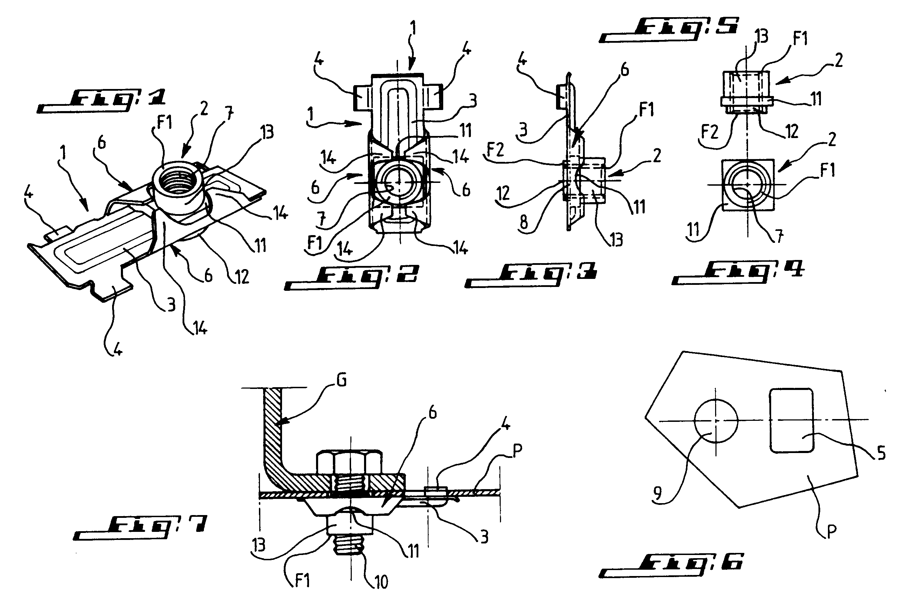

En se reportant aux dessins annexés, et en particulier à la figure 1, on voit un écrou encagé qui se compose essentiellement de deux éléments, à savoir une cage 1, et un écrou proprement dit 2.

La cage 1 est constituée par une embase 3 nervurée et allongée comportant deux pattes latérales 4 qui permettent le basculement de la cage et son montage dans une première ouverture rectangulaire 5 ménagée dans un panneau ou analogue P, comme on le décrira en détail plus loin.

L'embase 3 est en outre munie de deux ailes latérales 6 repliées contre l'écrou 2 pour le maintenir encagé sur l'embase 3.

L'écrou 2 comporte bien entendu un filetage 7 qui se situe au droit d'un orifice 8 (figure 3) prévu dans l'embase 3 et susceptible de venir en regard d'une deuxième ouverture 9 ménagée dans le panneau P (figure 6) pour permettre le passage d'un élément fileté, tel que par exemple une vis 10 (figure 7), après que l'écrou encagé se trouve en position montée sur le panneau P.

Toutes les dispositions ci-dessus sont connues d'après le brevet français N° 1 431 766 auquel on pourra utilement se reporter, et ne nécessitent donc pas d'explications supplémentaires.

Conformément à l'invention, l'écrou 2 présente de préférence la forme d'un fût taraudé comportant à une certaine distance de ses deux faces d'extrémité $F_1$, $F_2$, un collet 11 sur lequel prennent appui les deux ailes latérales repliées 6 pour retenir ledit collet et donc l'écrou ou fût 2 sur l'embase 3.

Une partie 12 de l'écrou ou fût 2, située d'un côté du collet 11, à savoir du côté de la face $F_2$, traverse et fait saillie de l'orifice 8 dans l'embase 3, comme on le voit bien sur la figure 3.

L'autre partie 13 de l'écrou 2, située de l'autre côté du collet 11, à savoir du côté de la face $F_1$, s'étend au-delà des ailes latérales 6 repliées sur ledit collet.

On observera ici que, comme cela est bien visible sur les figures 1 et 3, la partie 13 de l'écrou ou fût 2 est plus longue que la partie 12 faisant saillie de l'embase 3 par l'orifice 8.

On observera encore ici que le collet 11, venant de matière avec le fût taraudé 2 présente une forme polygonale, telle que par exemple carrée, mais toute autre forme pourrait être utilisée sans sortir du cadre de l'invention. De même l'écrou 2 pourrait lui aussi être sensiblement carré et non pas cylindrique comme représenté ici.

Comme on le voit bien sur les figures 1 et 2, les deux ailes latérales 6 repliées sur le collet 11 forment chacune une double griffe 14.

Cette double griffe est avantageuse et diminue le coût de l'écrou encagé, par le fait qu'elle exige beaucoup moins de matière que s'il fallait retenir tout le corps d'écrou comme c'était le cas dans les écrous encagés antérieurs.

Pour ce qui concerne le montage de l'écrou encagé selon cette invention sur le panneau P, on pourra utilement se reporter au brevet français antérieur mentionné précédemment.

Brièvement parlant, l'écrou encagé est introduit dans l'ouverture 5 où il peut basculer grâce aux pattes latérales 4 de façon à ce que l'embase 3 vienne s'appliquer sur le dessous du panneau P. Puis, à l'aide d'un tournevis par exemple, on fait effectuer un glissement de l'écrou encagé vers la droite de la figure 6, de manière que la partie 12 de l'écrou 2, sollicitée par l'élasticité de l'embase 3, vienne s'enclencher au travers de l'ouverture circulaire 9. De cette façon, l'écrou encagé est solidement verrouillé en position de montage.

Bien entendu, le démontage s'opère en exerçant une pression sur la partie 12 de l'écrou 2 puis en effectuant, avec un tournevis, les mouvements inverses de ceux décrits précédemment et permettant le montage.

Mais il est essentiel d'observer ici que l'écrou ou fût taraudé 2 possède une longueur qui correspond sensiblement à la totalité de la largeur de l'ouverture 5 dans le panneau P de sorte que ledit écrou puisse évidemment franchir cette ouverture. C'est dire que l'écrou 2 possèdera une résistance à la traction axiale qui sera maximum compte tenu des dimensions de l'ouverture 5, ce qui n'était pas le cas avec les écrous encagés antérieurs où l'ouverture 5 devait permettre le passage non seulement de l'écrou, mais aussi de l'épaisseur de la cage et de l'extrusion pratiquée au niveau de l'orifice 8 pour permettre le verrouillage dans l'ouverture 9 du panneau P.

A cet égard, on précisera qu'une telle extrusion est ici supprimée, puisque c'est avantageusement la partie 12 de l'écrou 2 qui la remplace et qui s'encastre, comme expliqué précédemment dans l'ouverture 9 du panneau P. Il en résulte que la construction de la cage est plus simple et moins coûteuse, sans parler du fait que, comme expliqué précédemment, la longueur du filetage 7 de l'écrou 2 est maximum compte tenu des limitations imposées par les dimensions de l'ouverture 5, de sorte que la résistance à la traction axiale après assemblage ne peut pas être meilleure.

Enfin, on voit sur la figure 7 un assemblage réalisé à l'aide d'un écrou encagé selon l'invention, cet assemblage étant constitué par une pièce G fixée sur le panneau P à l'aide de la vis 10. Du fait des qualités de l'écrou encagé selon cette invention et tenant essentiellement à la hauteur relativement importante du filetage 7, l'assemblage réalisé possèdera toutes les qualités requises de solidité et de résistance mécanique aux sollicitations extérieures par exemple.

Bien entendu, l'invention n'est nullement limitée au mode de réalisation décrit et illustré qui n'a été donné qu'à titre d'exemple.

## Revendications

1. Ecrou encagé perfectionné du type à montage en aveugle et comprenant une cage formée d'une embase (3) comportant d'une part deux pattes latérales (4) qui permettent le basculement de la cage dans une première ouverture (5) ménagée dans un panneau (P) ainsi que la retenue de cette cage contre ledit panneau, et d'autre part deux ailes latérales (6) repliées contre un écrou (2) qui est ainsi maintenu encagé sur l'embase (3) et dont le filetage (7) se situe au droit d'un orifice (8) prévu dans ladite embase et susceptible de venir en regard d'une deuxième ouverture (9) ménagée dans le panneau (P) pour permettre le passage d'un élément fileté, tel que par exemple une vis (10), après montage de l'écrou encagé sur le panneau, caractérisé en ce que ledit écrou (2) est constitué par un fût taraudé pourvu à une certaine distance de ses deux faces d'extrémité (F$_1$, F$_2$) d'un collet (11) venant de matière avec le fût, présentant une forme polygonale et sur lequel prennent appui les deux ailes latérales repliées (6) pour retenir ledit collet sur l'embase (3), de telle sorte qu'une partie (12) de l'écrou, d'un côté du collet, traverse et fasse saillie de l'orifice (8) ménagé dans l'embase (3) et que l'autre partie (13) de l'écrou, de l'autre côté du collet, s'étende au-delà des ailes latérales (6) repliées sur ledit collet.

2. Ecrou selon la revendication 1, caractérisé en ce que les deux ailes latérales (6) repliées sur le collet forment chacune une double griffe (14).

**Patentansprüche**

1. In einem Käfig zurückgehaltene verbesserte Mutter der blinden Einbauart, mit einem aus einem Grundansatz (3) bestehenden Käfig, wobei der Grundansatz einerseits zwei Seitenleisten (4), die das Kippen des Käfigs in eine in einer Platte (P) gebildete erste Oeffnung (5) sowie das Zurückhalten dieses Käfigs an die besagte Platte gestatten und andererseits zwei gegen die Mutter (2) zurückgefaltene Seitenflügel (6) aufweist, welche somit auf dem Grundansatz (3) im Käfig eingeschlossen gehalten wird und deren Gewinde (7) sich über einem in dem besagten Grundansatz vorgesehenen Loch (8) befindet und fähig ist, gegenüber einer zweiten in der Platte (P) gebildeten Oeffnung (9) zu kommen, um den Durchgang eines Gewindelementes wie z.B. einer Schraube (10) nach Anbringen der in dem Käfig zurückgehaltenen Mutter an der Platte zu gestatten, dadurch gekennzeichnet, dass die besagte Mutter (2) durch einen mit Innengewinde versehenen Schaft gebildet wird, der in einem gewissen Abstand von seinen beiden Endstirnflächen (F$_1$,F$_2$) mit einem werkstoffmässig einstückig mit dem Schaft gebildeten, eine vieleckige Gestalt aufweisen den Bund (11) versehen ist, an welchem sich die beiden zurückgefalteten Seitenflügel (6) abstützen, um den besagten Bund am Grundansatz (3) derart zurückzuhalten, dass ein Teil (12) der Mutter auf einer Seite des Bundes, das in dem Grundansatz (3) gebildete Loch (8) durchsetzt und von diesem vorsteht und dass der andere Teil (13) der Mutter auf der anderen Seite des Bundes sich über den auf dem besagten Bund zurückgefalteten Seitenflügel (6) hinaus erstreckt.

2. Mutter nach Anspruch 1, dadurch gekennzeichnet, dass die beiden auf dem Bund zurückgefalteten Seitenflügel (6) jeweils eine doppelte Klaue (14) bilden.

**Claims**

1. Improved caged nut of the blind mounting type and comprising a cage formed of a base (3) comprising on the one hand two side lugs (4) which allow the tilting of the cage into a first opening (5) formed in a panel (P) as well as the retaining of this cage against the said panel and on the other hand two side flanges (6) folded back against a nut (2) which is thus kept caged on the base (3) and the threading (7) of which is located plumb with an orifice (8) provided in the said base and susceptible of coming in front of a second opening (9) formed in the panel (P) to permit the passage of a threaded element such for example as a screw (10) after the mounting of the caged nut onto the panel, characterized in that the said nut (2) is constituted by an internally threaded shank provided at some distance of its two end faces (F$_1$, F$_2$) with a collar (11) made in one piece of material with the shank, exhibiting a polygonal shape and onto which are bearing both side flanges (6) folded back to retain the said collar onto the base (3) in such a manner that one portion (12) of the nut on one side of the collar extends through and projects from the orifice (8) formed in the base (3) and that the other portion (13) of the nut on the other side of the collar extends beyond the side flanges (6) folded down onto the said collar.

2. Nut according to claim 1, characterized in that both side flanges (6) folded down onto the collar each one form a double claw (14).

EP 0 391 764 B1

Fig.1

Fig.2

Fig.3

Fig.4

Fig.5

Fig.6

Fig.7

5